**Europäisches Patentamt**

**European Patent Office**

**Office européen des brevets**

(19)

(11) Veröffentlichungsnummer: **0 268 810**
**B1**

(12)

# EUROPÄISCHE PATENTSCHRIFT

(45) Veröffentlichungstag der Patentschrift:
08.08.90

(51) Int. Cl.⁵: **B29B 7/74**

(21) Anmeldenummer: **87115128.8**

(22) Anmeldetag: **16.10.87**

(54) Anlage zum Mischen und Dosieren von Kunstharz-Komponenten und Verfahren zum Betrieb dieser Anlage.

(30) Priorität: **24.10.86 CH 4236/86**

(43) Veröffentlichungstag der Anmeldung:
**01.06.88 Patentblatt 88/22**

(45) Bekanntmachung des Hinweises auf die Patenterteilung:
**08.08.90 Patentblatt 90/32**

(84) Benannte Vertragsstaaten:
**AT DE FR GB IT NL SE**

(56) Entgegenhaltungen:
**EP-A- 0 132 169**
**CH-A- 126 463**
**FR-A- 1 181 522**
**GB-A- 928 913**
**US-A- 3 217 400**
**US-A- 4 103 941**
**US-A- 4 142 681**

(73) Patentinhaber: **Spritztechnik AG, Wiesenstrasse 14,
CH-9327 Tübach(CH)**

(72) Erfinder: **Stutz, Jean, Wiesenstrasse 14,
CH-9327 Tübach(CH)**

(74) Vertreter: **EGLI-EUROPEAN PATENT ATTORNEYS,
Horneggstrasse 4, CH-8008 Zürich(CH)**

## Beschreibung

Die Erfindung betrifft eine Anlage zum Mischen und/oder Dosieren von mindestens zwei Komponenten von Kunstharzen zu einem zum Vergiessen, Verspritzen oder Schäumen bestimmten Produkt, wobei ein zur Zusammenführung, Mischung und Austragen der Komponenten dienender Mischkopf zwei Teile - eine Mischkammer mit einer Düse und einen Mischrotor - aufweist, und ein Verfahren zum Betrieb der Anlage. Eine derartige Anlage ist aus der EP-A 0 132 169 bekannt.

Anlagen zur Verarbeitung von zwei oder mehr Komponenten von Kunstharzen sind in ihrem Aufbau in dem Sinne ähnlich, dass die jeweils zusammenzuführenden Komponenten und das Austragen der Mischung in einem Mischkopf vorgenommen wird, siehe beispielsweise EP-A 0 064 209 B1. Hierbei ist es erwünscht, das solche Anlagen für möglichst viele Anwendungsfälle eingesetzt werden können. Dazu gehört beispielsweise das Vergiessen von Kunstharzen bei der Herstellung von Geräteteilen, das Spritzen und Beschichten von Kunstharzlacken zum Schutz von Stahl, Holz, Beton u.dgl., das Ausschäumen von Hohlräumen mit Schaumstoff bei Konstruktionen verschiedenster Art und das Verkleben und Ausfugen bei der Herstellung und Montage von Bauelementen.

Solche Anlagen müssen in bestimmten Zeitabständen einer Reinigung unterzogen werden. Hierzu wird der Mischkopf mit einem Lösungsmittel gespült. Die hierbei benötigte, verhältnismässig grosse Lösungsmittelmenge stellt jedoch eine unerwünschte Belastung der Umwelt dar, abgesehen von den Kosten für das Lösungsmittel.

Hier setzt die Erfindung ein, der die Aufgabe zugrundeliegt, eine Anlage der eingangs beschriebenen Art und das Verfahren in der Weise auszugestalten, dass der Lösungsmittelbedarf praktisch unbedeutend wird und trotzdem der Betrieb der Anlage in gleicher Weise gewährleistet ist wie beim Einsatz von Lösungsmitteln.

Diese Aufgabe wird gemäss der Erfindung dadurch gelöst, dass sowohl die Mischkammer an einem Mischkopfgehäuse als auch der Mischrotor an einer Rotorwelle mittels einer Schnellkupplung lösbar befestigt sind. Hierbei ist zweckmässig die Schnellkupplung als eine an dem mischkopfgehäuseseitigen Ende der Mischkammer und eine am mischkammerseitigen Ende des Mischgehäuses angeordnete Aufsteckkupplung mit einer innenumfangseitig angeordneten konkaven Kupplungsrille aus Kunststoff und mit einem aussenumfangseitig angeordneten konvexen Kupplungsring ausgebildet ist, wobei der Kupplungsring mit der Kupplungsrille passend zusammenfügbar ist. In gleicher Weise kann der Mischrotor und die Rotorwelle mit einer, eine Kupplungsrille und einen Kupplungsring aufweisenden Aufsteckkupplung ausgerüstet sein.

Die Erfindung umfasst auch ein Verfahren, dessen Aufgabe der optimale Betrieb der erfindungsgemässen Anlage ist. Diese Aufgabe wird gemäss der Erfindung dadurch gelöst, dass zur schnellen Reinigung des Mischkopfes die Mischkammer und der Mischrotor durch Lösen ihrer Schnellkupplungen von Mischkopf entfernt und durch eine saubere produktfreie Mischkammer und einen sauberen produktfreien Mischrotor ersetzt werden. Hierdurch wird erreicht, dass auf die Reinigung mit einem Lösungsmittel verzichtet werden kann. Zweckmässig werden jedoch vor dem Entfernen und Ersetzen der Mischkammer und des Mischrotors durch saubere, produktfreie Teile die im Betrieb befindlichen Teile mehrmals mit Druckluft gespült, wobei vor Beendigung des Ausblasens eine injektion einer praktisch nicht wahrnehmbaren Menge an Lösungsmittel vorgenommen wird..

Ein Ausführungsbeispiel der Erfindung ist in der Zeichnung dargestellt und nachfolgend beschrieben. Es zeigen:

Fig. 1 eine Anlage zum Mischen und Dosieren von zwei Kunstharz-Komponenten,

Fig. 2 einen schematisch dargestellten Schnitt einer Mischkammer und des mischkammerseitigen Endes eines Mischkopfgehäuses mit einer Schnellkupplung in getrenntem Zustand,

Fig. 3 einen schematisch dargestellten Schnitt eines Mischrotors und des mischrotorseitigen Endes einer Rotorwelle mit einer Schnellkupplung in getrenntem Zustand,

Fig. 4 einen schematisch dargestellten Schnitt einer Mischkammer, die in mehrere Kammerabschnitte unterteilt ist, und

Fig. 5 einen schematisch dargestellten Schnitt einer Mischkammer mit durch eine Schnellkupplung verbindbare Düsen.

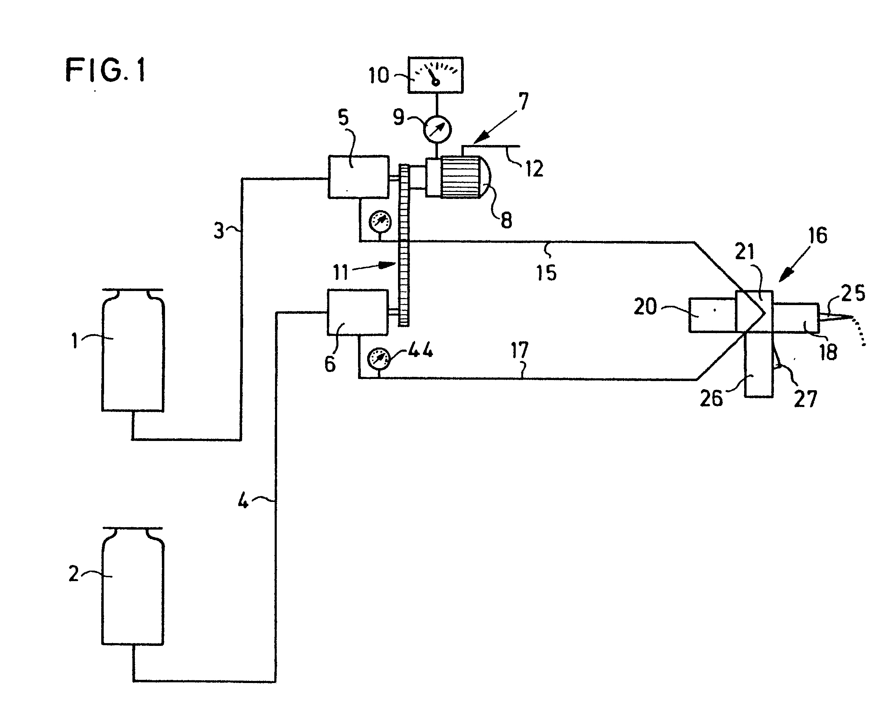

Die in Fig. 1 schematisch dargestellte Anlage zum Mischen und/oder Dosieren von Kunstharz-Komponenten weist zwei Behälter 1, 2 zur Aufnahme je einer Komponente auf. Werden mehr Komponenten verarbeitet, sind eine entsprechende Zahl von Behältern vorzusehen. Der Behälter 1 mit der einen Komponente ist über eine Leitung 3 mit einer Pumpe 5 verbunden, während der Behälter 2 mit der andern Komponente über eine Leitung 4 mit einer Pumpe 6 verbunden ist. Zum Antrieb der Pumpen 5, 6 dient ein Antriebsaggregat 7, welches einen Motor 8 mit Messinstrumenten 9, 10, einen Hülltrieb 11, beispielsweise einen Kettenantrieb, und eine Energiezuführung 12 für die Zufuhr von Energie für den Motor 8 aufweist.

Die Pumpe 5 fördert über eine Leitung 15 die eine Komponete zu einem Mischkopf 16, während die Pumpe 6 die andere Komponente über eine Leitung 17 zum Mischkopf 16 fördert. Die Leitungen 15, 17 münden in einer Mischkammer 18, in welcher die Mischung der beiden Komponenten mittels eines in der Mischkammer 18 befindlichen Mischrotors durchgeführt wird. Der Mischrotor wird durch einen am Mischkopf 16 angeordneten Motor 20 angetrieben, dessen Antriebswelle sich durch ein Mischkopfgehäuse 21 erstreckt und die den Mischrotor tragende Rotorwelle bildet. Die Mischkammer 18 weist eine Düse 25 auf, durch welche das aus den beiden Komponenten gemischte Produkt ausgetragen wird. Der Mischkopf 16 kann mittels eines Traggriffes 26 getragen und durch einen Betätigungsschalter 27 betätigt werden.

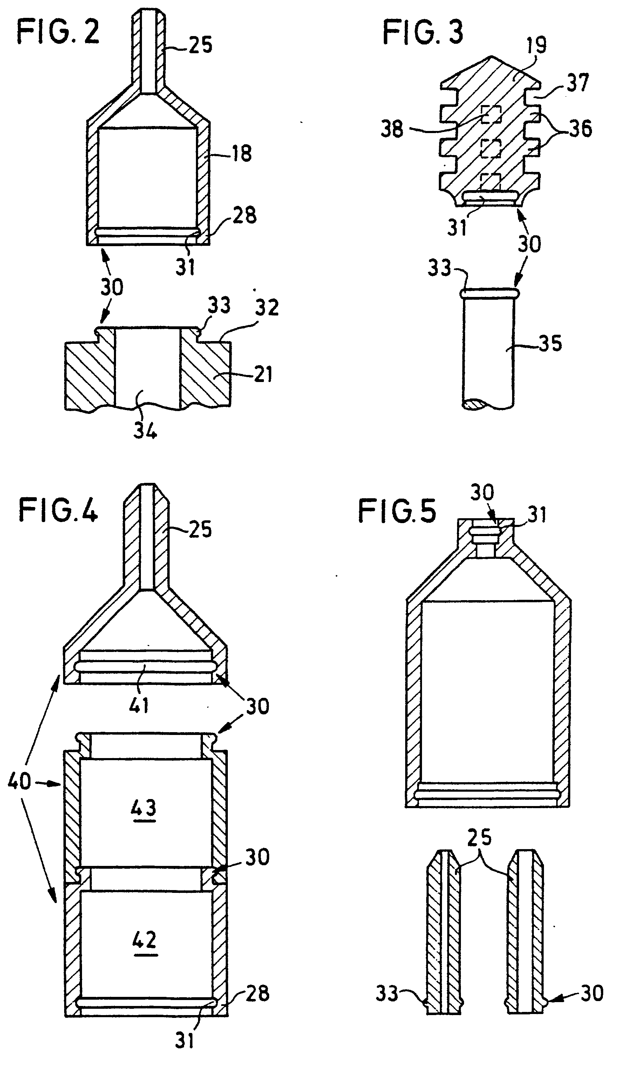

In Fig. 2 ist die Befestigung der Mischkammer 18 mit der Düse 25 mit Abstand von dem Mischkopfgehäuse 21 dargestellt. An dem mischkopfseitigen Ende 28 der Mischkammer 18 ist der eine Teil einer Schnellkupplung 30 dargestellt, der durch eine innenumfangseitig angeordnete Kupplungsrille 31 gebildet wird. Der andere Teil der Schnellkupplung 30 befindet sich an dem mischkammerseitigen Ende 33 des Mischkopfgehäuses 21 und ist ein aussenumfangseitig angeordneter Kupplungsring 33. Die Kupplungsrille 31 ist der konkave Teil und der Kupplungsring 33 der konvexe Teil der Kupplung 30. Die Kupplungsrille 31 und der Kupplungsring 33 bestehen aus einem Kunststoff und lassen sich dadurch formschlüssig als Aufsteckkupplung zusammenstecken, wodurch ein zuverlässiges Kuppeln der Mischkammer 18 mit dem Mischkopfgehäuse 21 erreicht wird.

In die Bohrung 34 des Mischkopfgehäuses 21 ragt die Rotorwelle 34, welche den Mischrotor 19 trägt. Der Mischrotor 19 ist ein zylinderförmiger Körper, welcher eine Anzahl durch Stege 36 getrennte Rillen 37 aufweist. Die Stege 36 könnten auch mit Unterbrechungen versehen und dadurch in Stifte 38 aufgelöst sein, die in Fig. 3 gestrichelt angedeutet sind.

Der Rotor 19 und die Rotorwelle 35 werden ebenfalls durch eine Schnellkupplung 30 miteinander verbunden, wobei die innenumfangseitige, konkave Kupplungsrille 31 am Rotor 19 und er aussenumfangseitige, konvexe Kupplungsring 33 and der Rotorwelle 35 angeordnet sind. Der Spalt zwischen der Wand der Bohrung 34 und der Rotorwelle 35 ist durch eine nichtdargestellte Dichtung, beispielsweise eine Gleitringdichtung abgedichtet.

Die Kupplungsrille 31 und der Kupplungsring 33 können auch vertauscht am Mischrotor 19 und an der Rotorwelle 35 bzw. an der Mischkammer 18 und am Mischkopfgehäuse 21 angeordnet sein.

In Fig. 4 ist eine Variante der Mischkammer dargestellt. Die Mischkammer 28 ist in Kammerabschnitte 40 unterteilt, wobei die einzelnen Abschnitte durch Schnellkupplungen 30 miteinander verbunden sind. Die Mischkammer 18 weist einen Kopfabschnitt 41, einen Grundabschnitt 42 und mindestens einen Zwischenabschnitt 43 auf. Die Kupplungsrille 31 am mischkopfseitigen Ende 28 des Grundabschnittes 42 ist zur Verbindung mit dem Kupplungsring 33 des Mischkopfgehäuses 21 vorgesehen.

In gleicher Weise kann auch der Mischrotor 19 in mehrere Abschnitte unterteilt sein, die durch Schnellkupplungen 30 miteinander verbunden sind.

Aus Fig. 5 ist ersichtlich, dass die Düse 25 von der Mischkammer 18 oder dem Kopfabschnitt 41 der Mischkammer getrennt und durch eine Schnellkupplung 30 mit der Mischkammer 18 bzw. dem Kopfabschnitt 41 verbunden sein kann. Dies erlaubt, Düsen verschiedener Durchmesser je nach dem zu verarbeitenden Produkt zu verwenden.

Die Anlage nach Fig. 1 wird wie folgt betrieben:

Nachdem die Komponenten in den Behältern 1, 2 eingefüllt sind, wird das Antriebsaggregat 7 angelassen, so dass die Pumpen 5, 6 durch die Leitungen 3, 4 die Komponenten ansaugen und in die Leitungen 15, 17 fördern, deren Druck durch Druckmesser 44 festgestellt und überwacht wird. Soll nun das Produkt aus der Düse 25 ausgetragen werden, wird der Mischkopf 16 mittels des Betätigungsschalters 27 in Betrieb gesetzt. Der Motor 20 setzt den Mischrotor 19 in Drehung, während die Komponenten durch den in den Leitungen 15, 17 herrschenden Druck in die Mischkammer 18 gepresst werden. Durch den Mischrotor 19 erfolgt eine intensive Mischung der Komponenten, welche homogenisiert in die Düse 25 gelangen und von dort ausgetragen werden.

Während des Austragens des homogenisierten Produkts setzt sich Komponentenmaterial an den Mündungen der Leitungen 15, 17 und Produktmaterial an der Düse 25 an. Dadurch sinkt die Leistung der Anlage, so dass nach einer bestimmten Betriebszeit der Ausgangszustand des Mischkopfes 16 wieder hergestellt werden muss. Dies erfolgt dadurch, dass die Mischkammer 18 mit der Düse 25 und der Mischrotor 19 durch Lösen der Schnellkupplung 30 entfernt werden und durch eine saubere, produktfreie Mischungkammer 18 und einen saubern, produktfreien Mischrotor 19 ersetzt werden. Diese Auswechslung geht wegen der verwendeten als Aufsteckkupplung ausgebildeten Schnellkupplung 30 äusserst rasch vor sich, so dass nur ein ganz kurzer Betriebsunterbruch entsteht. Ist die Mischkammer in Abschnitte unterteilt, können gegebenenfalls nur Teile der Mischkammer und des Mischrotors ersetzt werden.

Die Betriebszeit, nach welcher die Mischkammer 18 und der Mischrotor 19 ausgewechselt werden müssen, kann dadurch verlängert werden, dass nach einer bestimmten Betriebszeit eine Spülung der Mischkammer 18 und des Mischrotors 19 durchgeführt wird. Hierbei wird das in der Mischkammer 18 befindliche Produkt mit Druckluft aus der Mischkammer geblasen, während der Mischrotor 19 mit hoher Drehzahl rotiert und das Produkt an die Wandung der Mischkammer 18 schleudert. Vor Beendigung des Ausblasvorganges wird im Bereich der Komponenten-Eintrittsöffnungen in die Mischkammer 18 eine kleine Lösungsmittelmenge injiziert. Diese Injektion ist so gering, dass sie praktisch nach wahrgenommen und deshalb vernachlässigbar ist. Es entsteht selbst ohne Absaugung keine spürbare Geruchsbelastung. Zudem können in dem ausgetragenen Material keine Lösungsmittelspuren mit schädlicher Wirkung nachgewiesen werden. Nach einer Anzahl Spülungen, beispielsweise zehn Spülungen, erfolgt nun das Ersetzen der Mischkammer 18 und des Mischrotors 19, welcher Austausch, wie bereits erwähnt wurde, in sehr kurzer Zeit, d.h. in wenigen Sekunden erfolgen kann. Dies wird durch die Verwendung der Schnellkupplungen 30 ermöglicht. Das Auswechseln braucht hierbei nicht manuell, sondern kann auch durch einen Roboter ausgeführt werden, was bei einem vollautomatischen Betrieb wesentlich ist.

Grundsätzlich sind anstelle der beschriebenen Schnellkupplung auch andere Schnellkupplungen anwendbar, z.B. eine Bajonettkupplung oder Rohrleitungskupplung, d.h. Kupplungen, welche die Durchführung des beschriebenen Verfahrens ermöglichen.

## Patentansprüche

1. Anlage zum Mischen und/oder Dosieren von mindestens zwei Komponenten von Kunstharzen zu einem zum Vergiessen, Verspritzen oder Schäumen bestimmten Produkt, wobei ein zur Zusammenführung, Mischung und zum Austragen der Komponenten dienender Mischkopf zwei Teile - eine Mischkammer mit einer Düse (25) und einen Mischrotor (19) - aufweist, dadurch gekennzeichnet, dass sowohl die Mischkammer (18) an einem Mischkopfgehäuse (21) als auch der Mischrotor (19) an einer Rotorwelle (35) mittels einer Schnellkupplung (30) lösbar befestigt sind.

2. Anlage nach Anspruch 1, dadurch gekennzeichnet, dass die Schnellkupplung (30) als eine an dem mischkopfgehäuseseitigen Ende (28) der Mischkammer (18) und eine an dem mischkammerseitigen Ende des Mischgehäuses (21) angeordnete Aufsteckkupplung mit einer innenumfangseitig angeordneten, konkaven Kupplungsrille (31) aus Kunststoff und mit einem aussenumfangseitig angeordneten konvexen Kupplungsring (33) aus Kunststoff ausgebildet ist, wobei der Kupplungsring mit der Kupplungsrille satt passend zusammenfügbar ist.

3. Anlage nach Anspruch 1 oder 2, dadurch gekennzeichnet, dass die Schnellkupplung (30) als eine an dem mischkopfgehäuseseitigen Ende des Mischrotors (19) und eine am mischkammerseitigen Ende (32) der Welle des Mischrotors (19) angeordnete Aufsteckkupplung einer innenumfangseitig angeordneten konkaven Kupplungsrille (31) aus Kunststoff und mit einem aussenumfangseitig angeordneten konvexen Kupplungsring (33) aus Kunststoff ausgebildet ist.

4. Anlage nach einem der Ansprüche 1 bis 3, dadurch gekennzeichnet, dass die Mischkammer (18) an ihrem düsenseitigen Ende und die an der Mischkammer angeordnete Düse (25) durch eine mit einer Kupplungsrille (31) und einem Kupplungsring (33) versehenen Aufsteckkupplung verbunden sind.

5. Anlage nach einem der Ansprüche 1 bis 4, dadurch gekennzeichnet, dass die Mischkammer (18) in Kammerabschnitte (40) unterteilt ist, welche durch eine mit der Kupplungsrille (31) und dem Kupplungsring (33) versehene Aufsteckkupplung miteinander verbunden sind.

6. Anlage nach Anspruch 5, dadurch gekennzeichnet, dass die Kammerabschnitte (40) sich aus einem Grundabschnitt (42), einem Kopfabschnitt (41) und mindestens einem Zwischenabschnitt (43) zusammensetzen.

7. Anlage nach Anspruch 6, dadurch gekennzeichnet, dass der Kopfabschnitt (41) eine Aufsteckkupplung (30) zur Verbindung mit Düsen (25) mit unterschiedlich grosser Düsenbohrung aufweist.

8. Verfahren zum Betrieb der Anlage nach einem der Ansprüche 1 bis 7, dadurch gekennzeichnet, dass zur schnellen Reinigung des Mischkopfes (16) die Mischkammer (18) und der Mischrotor (19) durch Trennen ihrer Aufsteckkupplungen (30) vom Mischkopfgehäuse (21) und von der Rotorwelle (35) entfernt und durch eine saubere, produktfreie Kammer (18) und einen sauberen, produktfreien Mischrotor (19) ersetzt werden.

9. Verfahren nach Anspruch 8, dadurch gekennzeichnet, dass vor dem Entfernen und Ersetzen der Mischkammer (18) und des Mischrotors (19) durch saubere, produktfreie Teile die im Betrieb befindlichen Teile (18,19) mehrmals mit Druckluft gespült werden, wobei vor Beendigung des Ausblasens eine Injektion einer praktisch nicht wahrnehmbaren Menge an Lösungsmittel vorgenommen wird.

## Revendications

1. Dispositif pour mélanger et/ou doser au moins deux composants de résine synthétique pour obtenir un produit destiné au moulage par coulée, au moulage par injection ou à la formation de mousse, dans lequel une tête de mélange destinée à réunir, mélanger et à déverser les composants comprend deux parties - une chambre de mélange avec une buse (25) et un rotor de mélange (19), caractérisé en ce que la chambre de mélange (18) est reliée de manière séparable à un carter de tête de mélange (21), et le rotor de mélange (19) est relié de manière séparable à un arbre de rotor (35), par un accouplement rapide.

2. Dispositif selon la revendication 1, caractérisé en ce que l'accouplement rapide (30) est réalisé en tant qu'accouplement à emboîtement disposé à l'extrémité (28) côté carter de tête de mélange de la chambre de mélange (18) et à l'extrémité côté chambre de mélange du carter de mélange (21), ledit accouplement à emboîtement comportant une rainure d'accouplement (31) concave en matière plastique disposée à sa périphérie intérieure, et une bague d'accouplement (33) convexe en matière plastique disposée à sa périphérie extérieure, la bague d'accouplement pouvant être posée à plat sur la rainure d'accouplement.

3. Dispositif selon l'une des revendications 1 ou 2, caractérisé en ce que l'accouplement rapide (30) est réalisé en tant qu'accouplement à emboîtement d'une rainure d'accouplement (31) concave en matière plastique disposée à sa périphérie intérieure et comportant une bague d'accouplement (33) convexe en matière plastique disposée à sa périphérie extérieure, ledit accouplement à emboîtement étant disposé à l'extrémité côté carter de tête de mélange du rotor de mélange (19) et à l'extrémité (32) côté chambre de mélange de l'arbre du rotor de mélange (19).

4. Dispositif selon l'une des revendications 1 à 3, caractérisé en ce que la chambre de mélange (18) a son extrémité comportant la buse et la buse (25) solidaire de la chambre de mélange sont reliées par un accouplement à emboîtement muni d'une rainure d'accouplement (31) et d'une bague d'accouplement (33).

5. Dispositif selon l'une des revendications 1 à 4, caractérisé en ce que la chambre de mélange (18) est divisée en compartiments de chambre (40) reliés entre eux par un accouplement à emboîtement muni de la rainure d'accouplement (31) et de la bague d'accouplement (33).

6. Dispositif selon la revendication 5, caractérisé en ce que les compartiments de chambre (40) se composent d'un compartiment de base (42), d'un compartiment de tête (41) et au moins d'un compartiment intermédiaire (43).

7. Dispositif selon la revendication 6, caractérisé en ce que le compartiment de tête (41) comprend un accouplement à emboîtement (30) pour permettre son assemblage avec des buses (25) ayant des alésages de buses de grandeur différente.

8. Procédé pour la mise en œuvre du dispositif selon l'une des revendications 1 à 7, caractérisé en ce que, en vue d'un nettoyage rapide de la tête de mélange (16), la chambre de mélange (18) et le rotor de mélange (19) sont séparés du carter de tête de mélange (21) et de l'arbre du rotor (35) en séparant leurs accouplements à emboîtement (30) et sont remplacés par une chambre (18) propre, exempte de produit, et par un rotor de mélange (19) propre, exempt de produit.

9. Procédé selon la revendication 8, caractérisé en ce qu'avant d'enlever et de remplacer la chambre de mélange (18) et le rotor de mélange (19) par des éléments propres, exempts de produit, les éléments en fonctionnement (18, 19) sont nettoyés plusieurs fois par de l'air comprimé, et avant la fin du nettoyage on injecte une quantité pratiquement indétectable de solvant.

**Claims**

1. Installation for mixing and/or dosing at least two components of synthetic resins to give a product intended for casting, injection-moulding or foaming purposes, with a mixer head, which serves to bring together, mix and discharge the components, having two parts – a mixing chamber with a nozzle (25) and a mixing rotor (19), characterised in that the mixing chamber (18) is detachably secured to a mixer head housing (21) and the mixing rotor (19) is detachably secured to a rotor shaft (35), both being secured in this manner by means of a quick-coupling (30).

2. Installation according to claim 1, characterised in that the quick-coupling (30) is formed as a plug-on coupling, which is arranged at the end (28) of the mixing chamber (18) on the mixer head housing side, and as a plug-on coupling, which is arranged at the end of the mixing housing (21) on the mixing chamber side, said coupling having a concave coupling groove (31) which is arranged on the inner periphery side and is made of plastics material and having a convex coupling ring (33) which is arranged on the outer periphery side and is made of plastics material, it being possible to join the coupling ring with the coupling groove in a close fitting manner.

3. Installation according to claim 1 or 2, characterised in that the quick-coupling (30) is formed as a plug-on coupling, which is arranged at the end of the mixing rotor (19) on the mixer head housing side, and as a plug-on coupling, which is arranged at the end (32) of the shaft of the mixing rotor (19) on the mixing chamber side, said coupling having a concave coupling groove (31) which is arranged on the inner periphery side and is made of plastics material and having a convex coupling ring (33) which is arranged on the outer periphery side and is made of plastics material.

4. Installation according to one of the claims 1 to 3, characterised in that the mixing chamber (18) at its end on the nozzle side and the nozzle (25), which is arranged on the mixing chamber, are connected by means of a plug-on coupling which is provided with a coupling groove (31) and a coupling ring (33).

5. Installation according to one of the claims 1 to 4, characterised in that the mixing chamber (18) is subdivided into chamber sections (40) which are connected with each other by means of a plug-on coupling which is provided with the coupling groove (31) and the coupling ring (33).

6. Installation according to claim 5, characterised in that the chamber sections (40) consist fo a base section (42), a head section (41) and at least one intermediate section (43).

7. Installation according to claim 6, characterised in that the head section (41) has a plug-on coupling (30) for the purposes of connection with nozzles (25) with differing nozzle bore size.

8. Method for the operation of the installation according to one of the claims 1 to 7, characterised in that, for the purpose of quickly cleaning the mixer head (16), the mixing chamber (18) and the mixing rotor (19) are removed from the mixer head housing (21) and from the rotor shaft (35) by means of disconnection of their plug-on couplings (30) and are replaced by a comparatively clean, product-free chamber (18) and a comparatively clean, product-free mixing rotor (19).

9. Method according to claim 8, characterised in that before removal and replacement of the mixing chamber (18) and of the mixing rotor (19) with comparatively clean, product-free parts, the parts (18, 19), which are in operation, are flushed several times with compressed air, in which case a practically imperceptible quantity of solvent is injected before termination of the blowing-out process.

## FIG.1

EP 0 268 810 B1

EP 0 268 810 B1

FIG. 2

FIG. 3

FIG.4

FIG.5